# EUROPEAN PATENT APPLICATION

(11) **EP 4 722 685 A1**
(43) Date of publication of application: **08.04.2026**
(21) Application number: 24814879.3
(22) Date of filing: 19.02.2024
(51) Int. Cl.: G01N 1/00, G01N 30/16

(54) **SAMPLING SYSTEM AND SAMPLING METHOD**

(30) Priority: 31.05.2023 JP 2023090502
(71) Applicant: SHIMADZU CORPORATION, Kyoto-shi, Kyoto 604-8511 (JP)
(72) Inventor: NAGAO, Yu, Kyoto-shi, Kyoto 604-8511 (JP); ISHII, Toshinari, Kyoto-shi, Kyoto 604-8511 (JP)
(74) Representative: Müller-Boré & Partner Patentanwälte PartG mbB
(86) International application number: PCT/JP2024/005874
(87) International publication number: WO 2024/247392

(57) **Abstract**

A sampling system samples a sample to be introduced into an analysis apparatus, and includes a chamber, a sampling loop, a first pressure gauge, a second pressure gauge, a storage unit, and an output unit. A sample is collected in the chamber. The sample collected in the chamber is introduced into the sampling loop. The first pressure gauge or the second pressure gauge measures the pressure of at least one of the chamber and the sampling loop. The storage unit stores pressure information indicating the pressure at each k-th (k is an integer of 1 or more) analysis time point measured by the first pressure gauge or the second pressure gauge. The output unit outputs the pressure information stored in the storage unit.

## Description

### [Technical Field]

The present invention relates to a sampling system and a sampling method.

### [Background Art]

A GC (Gas Chromatograph) is known as an analysis apparatus that separates substances contained in a sample gas for each different component. A sample gas to be analyzed is introduced into the GC by a sampling system. For example, Patent Literature 1 describes a sample injection method for introducing a sample gas into a GC using a gas-tight syringe. Alternatively, depending on the pressure or amount of the sample gas, the sample gas may be introduced into the GC by a gas sampler that combines a sampling loop and a valve.

[Patent Literature 1] Japanese Unexamined Patent Application Publication No. 2016-50914

### [Summary of Invention]

### [Problem to be Solved by the Invention]

To analyze a sample gas using a gas sampler method, an amount of sample gas sufficient to displace the interior of the sampling loop is required. However, when the sample is rare or expensive, it is not easy to prepare a large amount of sample gas.

Furthermore, to confirm the analysis results, the analysis may be repeated on sample gas collected under the same conditions. In this case, the required amount of sample gas further increases. It is possible to increase the bulk of the sample gas by diluting it. However, depending on the collection environment of the sample gas, the ratio of components in the sample gas changes over time. Moreover, impurities from the atmosphere are mixed into the sample gas with each collection. Therefore, it is difficult to dilute the sample gas under the same conditions. As a result, the reliability of the analysis results decreases.

An object of the present invention is to provide a sampling system and a sampling method capable of obtaining analysis results with high reliability even when the sample is in a small amount.

### [Means for Solving the Problem]

One aspect of the present invention relates to a sampling system for sampling a sample to be introduced into an analysis apparatus, the sampling system comprising: a chamber in which the sample is collected; a sampling loop into which the sample collected in the chamber is introduced; a pressure gauge that measures the pressure of at least one of the chamber and the sampling loop; a storage unit that stores pressure information indicating the pressure at each k-th (k is an integer of 1 or more) analysis time point measured by the pressure gauge; and an output unit that outputs the pressure information stored in the storage unit.

Another aspect of the present invention relates to a sampling system for sampling a sample to be introduced into an analysis apparatus, the sampling system comprising: a chamber in which the sample is collected; a sampling loop into which the sample collected in the chamber is introduced; a pressure gauge that measures the pressure of at least one of the chamber and the sampling loop; a flow rate adjustment unit that adjusts the flow rate of the sample introduced from the chamber into the sampling loop; and a flow rate control unit that controls the operation of the flow rate adjustment unit so that a constant amount of sample is introduced into the sampling loop, based on the pressure at each k-th (k is an integer of 1 or more) analysis time point measured by the pressure gauge.

Still another aspect of the present invention relates to a sampling method for sampling a sample to be introduced into an analysis apparatus, the sampling method comprising: collecting the sample in a chamber; introducing the sample collected in the chamber into a sampling loop; measuring the pressure of at least one of the chamber and the sampling loop with a pressure gauge; storing pressure information indicating the pressure at each k-th (k is an integer of 1 or more) analysis time point measured by the pressure gauge in a storage unit; and outputting the pressure information stored in the storage unit.

Yet another aspect of the present invention relates to a sampling method for sampling a sample to be introduced into an analysis apparatus, the sampling method comprising: collecting the sample in a chamber; introducing the sample collected in the chamber into a sampling loop; measuring the pressure of at least one of the chamber and the sampling loop with a pressure gauge; adjusting the flow rate of the sample introduced from the chamber into the sampling loop with a flow rate adjustment unit; and controlling the operation of the flow rate adjustment unit so that a constant amount of sample is introduced into the sampling loop, based on the pressure at each k-th (k is an integer of 1 or more) analysis time point measured by the pressure gauge.

### [Effects of the Invention]

According to the present invention, analysis results can be obtained with high reliability even when the sample is in a small amount.

### [Brief Description of Drawings]

[FIG. 1] FIG. 1 is a diagram showing a configuration of an analysis system including a sampling system according to a first embodiment of the present invention.
[FIG. 2] FIG. 2 is a block diagram of the analysis system for explaining the configuration of the sampling system.
[FIG. 3] FIG. 3 is a block diagram of the analysis system for explaining the configuration of functional units of the control unit in FIG. 2.
[FIG. 4] FIG. 4 is a flowchart showing an example of an algorithm for a sampling process executed by the control unit of FIG. 3 based on a sampling program.
[FIG. 5] FIG. 5 is a diagram showing a configuration of a sampling system according to a second embodiment of the present invention.
[FIG. 6] FIG. 6 is a block diagram of the analysis system for explaining the configuration of functional units of the control unit in FIG. 5.
[FIG. 7] FIG. 7 is a flowchart showing an example of an algorithm for a sampling process executed by the control unit of FIG. 6 based on a sampling program.

### [Description of Embodiments]

### 1.First Embodiment

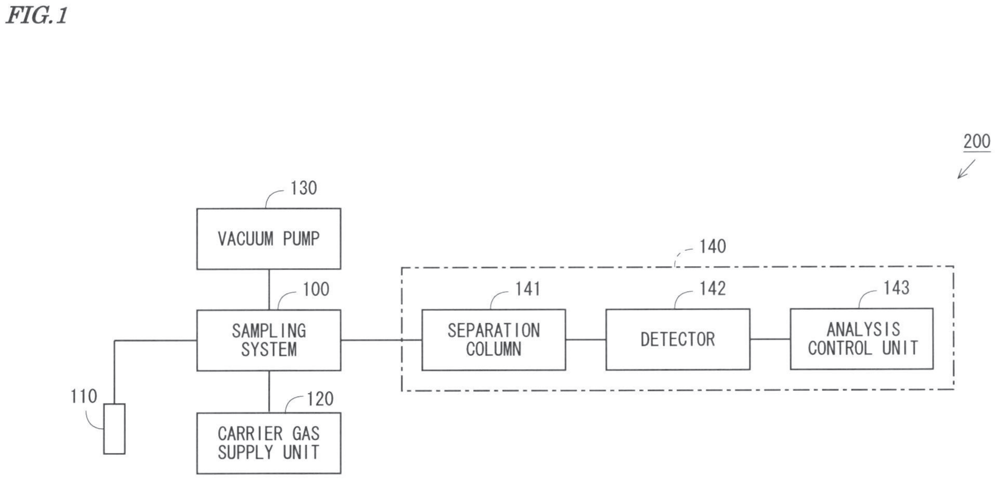

(1) Configuration of Analysis System Hereinafter, a sampling system and a sampling method according to embodiments of the present invention will be described in detail with reference to the drawings. FIG. 1 is a diagram showing a configuration of an analysis system 200 including a sampling system 100 according to a first embodiment of the present invention. As shown in FIG. 1, the analysis system 200 includes a sampling system 100, a gas cylinder 110, a carrier gas supply unit 120, a vacuum pump 130, and an analysis apparatus 140.

The gas cylinder 110 is filled with a sample gas to be analyzed at high pressure. The carrier gas supply unit 120 includes, for example, a gas cylinder, a pump, a flow rate adjustment valve, and a flow path switching valve. The carrier gas supply unit 120 supplies carrier gas to the sampling system 100. The carrier gas may be, for example, an inert gas such as helium gas, or may be hydrogen gas.

The sampling system 100 uses a sampling loop to introduce the sample gas sealed in the gas cylinder 110 into the analysis apparatus 140 together with the carrier gas supplied by the carrier gas supply unit 120. The vacuum pump 130 is used to evacuate the sampling loop of the sampling system 100. Details of the sampling system 100 will be described later.

The analysis apparatus 140 is, for example, a GC (Gas Chromatograph), and includes a separation column 141, a detector 142, and an analysis control unit 143. The separation column 141 is housed in a column thermostat (not shown) and maintained at a predetermined constant temperature. The separation column 141 separates the sample gas introduced by the sampling system 100 into components based on differences in chemical properties or composition. The detector 142 detects the components of the sample gas separated by the separation column 141 and outputs a detection signal corresponding to the detection intensity to the analysis control unit 143.

The analysis control unit 143 includes, for example, a CPU (Central Processing Unit), RAM (Random Access Memory), ROM (Read Only Memory), a hard disk, and the like. The analysis control unit 143 controls the operations of the column thermostat and the detector 142. Furthermore, the analysis control unit 143 processes the detection signal output by the detector 142 to generate a gas chromatogram showing the relationship between the retention time of each component in the separation column 141 and the detection intensity.

In this example, the analysis apparatus 140 is a GC, but the embodiment is not limited to this. The analysis apparatus 140 may be, for example, a GCMS (Gas Chromatograph-Mass Spectrometer). In this case, the analysis apparatus 140 further includes a mass spectrometer instead of or in addition to the detector 142. The analysis control unit 143 generates a mass spectrum by processing the analysis results from the mass spectrometer.

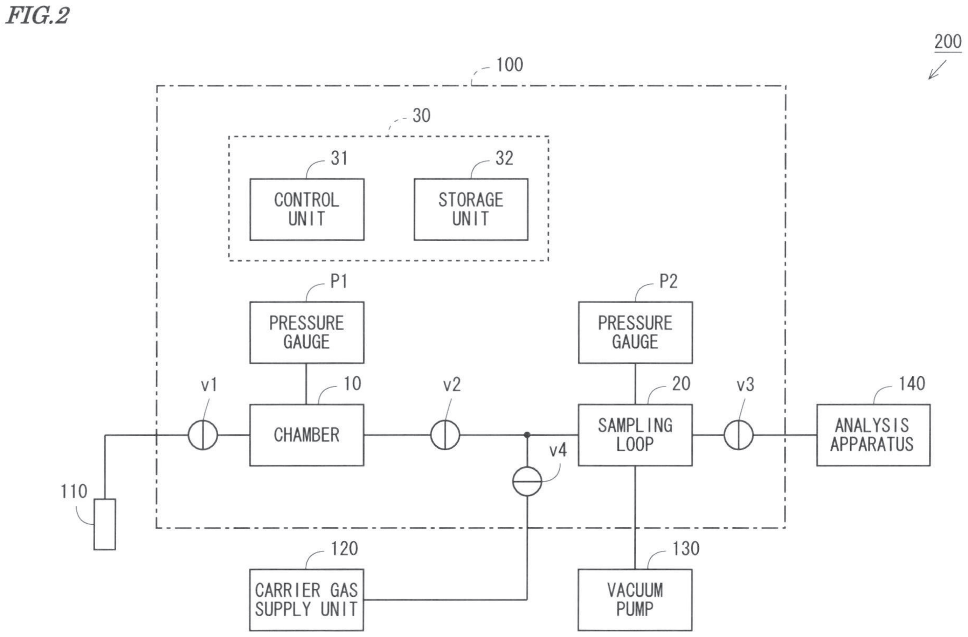

(2) Configuration of Sampling System FIG. 2 is a block diagram of the analysis system 200 for explaining the configuration of the sampling system 100. As shown in FIG. 2, the sampling system 100 includes a chamber 10, a sampling loop 20, and a processing device 30. The sampling system 100 also includes a plurality of valves v1 to v4 and a plurality of pressure gauges P1, P2.

The valve v1, the chamber 10, the valve v2, the sampling loop 20, and the valve v3 are provided in this order from upstream to downstream in the flow path between the gas cylinder 110 and the analysis apparatus 140. The carrier gas supply unit 120 is connected to the flow path section between valve v2 and the sampling loop 20 via a branch flow path. The valve v4 is provided in the branch flow path. The vacuum pump 130 is connected to the sampling loop 20. The pressure gauge P1 measures the pressure of the chamber 10. The pressure gauge P2 measures the pressure of the sampling loop 20.

The processing device 30 includes a control unit 31 and a storage unit 32. The control unit 31 includes, for example, a CPU. The control unit 31 performs a sampling process for introducing the sample gas into the analysis apparatus 140 by controlling the operations of the valves v1 to v4, the vacuum pump 130, and the like.

The storage unit 32 includes RAM (Random Access Memory), ROM (Read Only Memory), a hard disk, or the like. The control unit 31 and the storage unit 32 may be realized by a microcomputer. The storage unit 32 stores a sampling program for causing the control unit 31 to execute the sampling process. The storage unit 32 also stores pressure information indicating the pressures measured by the pressure gauges P1 and P2 at predetermined time points.

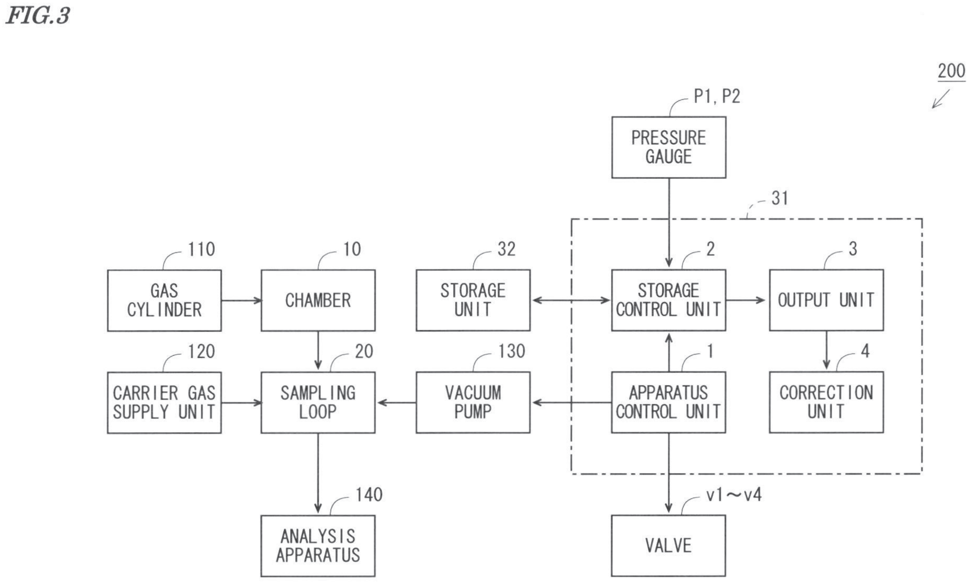

FIG. 3 is a block diagram of the analysis system 200 for explaining the configuration of functional units of the control unit 31 in FIG. 2. As shown in FIG. 3, the control unit 31 includes, as functional units, an apparatus control unit 1, a storage control unit 2, an output unit 3, and a correction unit 4. The functional units of FIG. 3 are realized by the control unit 31 executing the sampling program stored in the storage unit 32. At least a part of the functional units of the control unit 31 may be realized by hardware such as an electronic circuit.

The apparatus control unit 1 controls the operations of the valves v1 to v4 and the vacuum pump 130. The storage control unit 2 causes the storage unit 32 to store pressure information indicating the pressures measured by the pressure gauges P1 and P2 each time an analysis is performed by the analysis apparatus 140. The output unit 3 outputs the pressure information at each analysis time point stored in the storage unit 32. The correction unit 4 generates correction information for correcting the analysis results obtained by the analysis apparatus 140 to analysis results for a case where a constant amount of sample gas is introduced into the analysis apparatus 140, based on the pressure information output by the storage unit 32.

### (3) Sampling Process

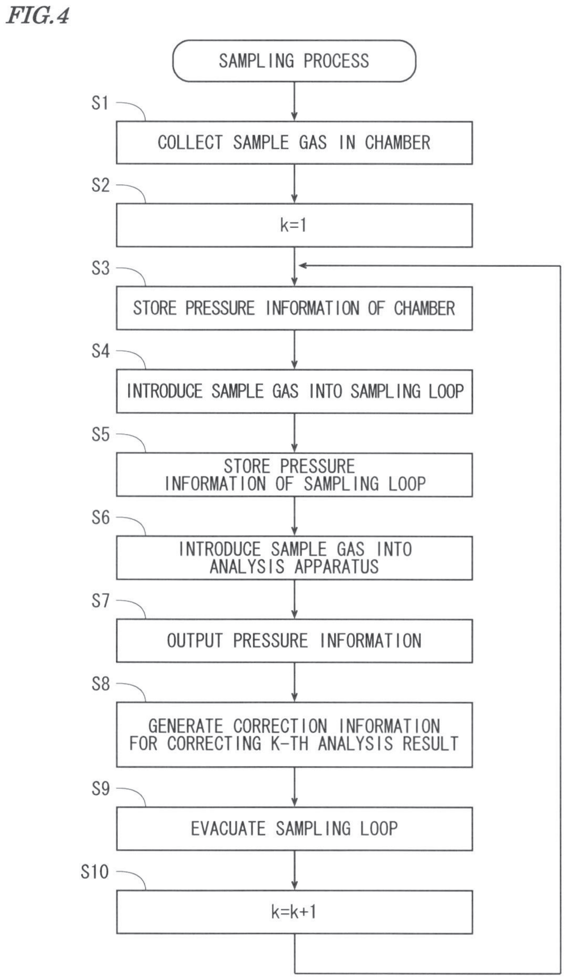

FIG. 4 is a flowchart showing an example of an algorithm for a sampling process executed by the control unit 31 of FIG. 3 based on a sampling program. Hereinafter, the sampling process will be described using the analysis system 200 of FIG. 3 and the flowchart of FIG. 4. In the initial state of the sampling process, the valves v1 to v4 are in a closed position. The sampling loop 20 is evacuated by the vacuum pump 130.

First, the apparatus control unit 1 opens the valve v1 for a predetermined time and then closes the valve v1 again, thereby collecting the sample gas sealed in the gas cylinder 110 into the chamber 10 (Step S1). In this example, in the initial state, the chamber 10 is filled with air, but it may be filled with an inert gas. In this case, impurities are prevented from being mixed into the sample gas collected in the chamber 10. Alternatively, the chamber 10 may be evacuated in the initial state. According to this configuration, the sample gas can be easily collected into the chamber 10 even when the pressure of the sample gas in the gas cylinder 110 is not very high.

Next, the apparatus control unit 1 sets a variable k to 1 (Step S2). The variable k indicates the number of the analysis repeatedly performed by the analysis apparatus 140. Therefore, it is indicated that the k-th analysis is to be performed at the current time point. Either Step S1 or Step S2 may be executed first, or they may be executed simultaneously.

Subsequently, the storage control unit 2 causes the storage unit 32 to store pressure information indicating the pressure of the chamber 10 measured by the pressure gauge P1 (Step S3). The pressure information of the chamber 10 corresponds to the molar amount of the sample gas collected in the chamber 10. Therefore, by recording the pressure information of the chamber 10, the molar amount of the sample gas remaining in the chamber 10 can be managed.

Thereafter, the apparatus control unit 1 opens the valve v2 for a predetermined time and then closes the valve v2 again, thereby introducing a part of the sample gas collected in the chamber 10 into the sampling loop 20 (Step S4). In the initial state, the sampling loop 20 is evacuated, so the sample gas can be easily introduced into the sampling loop 20 by opening and closing the valve v2.

Next, the storage control unit 2 causes the storage unit 32 to store pressure information indicating the pressure of the sampling loop 20 measured by the pressure gauge P2 (Step S5). The pressure information of the sampling loop 20 corresponds to the molar amount of the sample gas introduced into the sampling loop 20. Therefore, by recording the pressure information of the sampling loop 20, the molar amount of the sample gas introduced into the sampling loop 20 can be managed.

Subsequently, the apparatus control unit 1 opens the valves v3 and v4 for a predetermined time and then closes the valves v3 and v4 again, thereby introducing the sample gas introduced into the sampling loop 20 into the analysis apparatus 140 together with the carrier gas supplied by the carrier gas supply unit 120 (Step S6). In the analysis apparatus 140, the k-th analysis is executed on the introduced sample gas.

Thereafter, the output unit 3 outputs the pressure information stored in the storage unit 32 (Step S7). Next, the correction unit 4 generates correction information for correcting the k-th analysis result obtained by the analysis apparatus 140, based on the pressure information output in Step S7 (Step S8). The analysis result is, for example, the height or area of each peak in a gas chromatogram. The analysis result may be the height or area of each peak in a mass spectrum.

Here, let Pₖ be the pressure of the sampling loop 20 in the k-th analysis. In this case, the correction information for correcting the k-th analysis result may be, for example, P₁/Pₖ. By multiplying the k-th analysis result by this correction information, an analysis result can be obtained for a case where a sample gas of the same molar amount as the sample gas introduced into the analysis apparatus 140 during the first analysis is introduced in the k-th analysis.

Subsequently, the apparatus control unit 1 turns on the vacuum pump 130 for a predetermined time and then turns off the vacuum pump 130 again, thereby evacuating the sampling loop 20 (Step S9). The apparatus control unit 1 also adds 1 to the variable k (Step S10). Either Step S9 or Step S10 may be executed first, or they may be executed simultaneously. Thereafter, the process returns to Step S3. As a result, Steps S3 to S10 corresponding to the (k+1)-th analysis are repeated.

### (4) Effects

In the sampling system 100 according to this embodiment, pressure information indicating the pressures of the chamber 10 and the sampling loop 20 at each of the k-th analysis time points is stored in the storage unit 32, and the pressure information is output by the output unit 3. Based on the pressure information output by the output unit 3, correction information for correcting the analysis results obtained by the analysis apparatus 140 to analysis results for a case where a constant amount of sample is introduced into the analysis apparatus 140 is generated by the correction unit 4.

According to this configuration, even when the amount of sample introduced into the sampling loop 20 decreases with each repeated analysis, it is possible to use the correction information to correct the analysis result of each analysis to an analysis result for a case where a constant amount of sample is introduced into the analysis apparatus 140. Therefore, it is not necessary to introduce the sample into the sampling loop 20 under the same conditions for each analysis. Furthermore, even when the introduced sample is in a small amount, the sample can be repeatedly analyzed, and analysis results similar to those obtained when the sample is introduced into the analysis apparatus 140 under the same conditions for each analysis can be obtained. This improves the reliability of the analysis results. As a result, analysis results can be obtained with high reliability even when the sample is in a small amount.

### 2.Second Embodiment

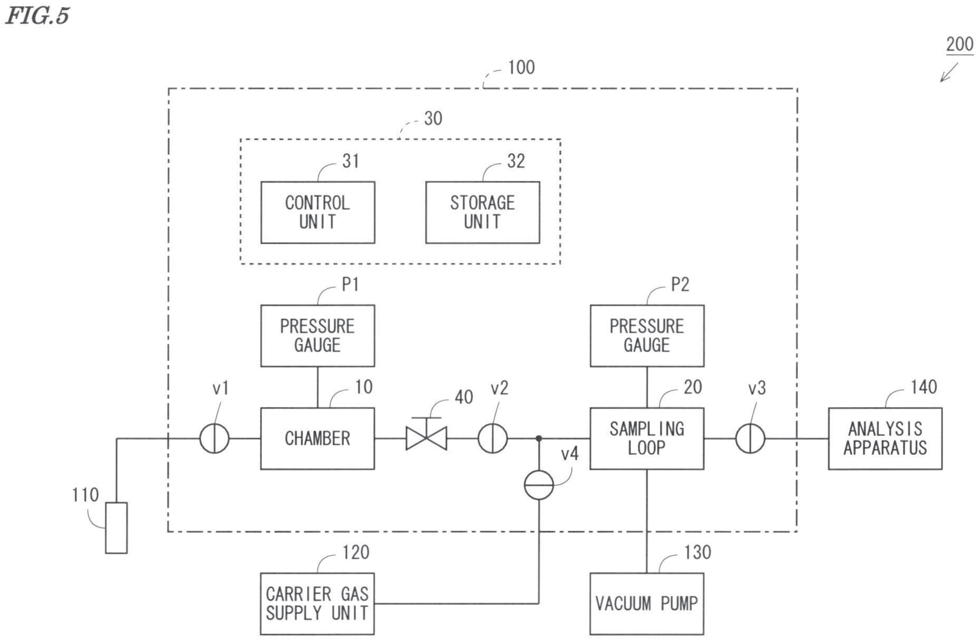

(1) Configuration of Sampling System Differences between the sampling system and sampling method according to the second embodiment and the sampling system and sampling method according to the first embodiment will be described. FIG. 5 is a diagram showing a configuration of a sampling system 100 according to a second embodiment of the present invention. As shown in FIG. 5, the sampling system 100 further includes a flow rate adjustment unit 40.

The flow rate adjustment unit 40 is, for example, a flow rate adjustment valve, and adjusts the flow rate of the sample gas introduced from the chamber 10 into the sampling loop 20 when the valve v2 is open by changing the valve opening degree. In this example, the flow rate adjustment unit 40 is provided in a part of the flow path between the chamber 10 and the valve v2, but the embodiment is not limited to this. The position of the flow rate adjustment unit 40 and the position of the valve v2 may be reversed. The flow rate adjustment unit 40 may also be a pump.

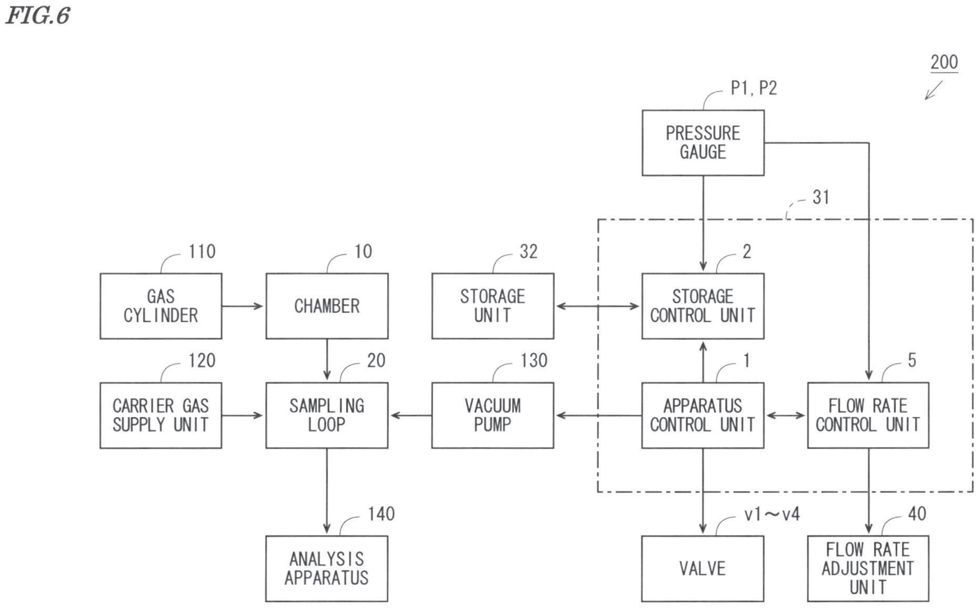

FIG. 6 is a block diagram of the analysis system 200 for explaining the configuration of functional units of the control unit 31 in FIG. 5. As shown in FIG. 6, the control unit 31 includes a flow rate control unit 5 as a functional unit, instead of the output unit 3 and the correction unit 4. In this embodiment, the control unit 31 includes the storage control unit 2 that operates similarly to the first embodiment, but the embodiment is not limited to this. If it is not necessary to store pressure information in the storage unit 32, the control unit 31 does not need to include the storage control unit 2.

The flow rate control unit 5 controls the operation of the flow rate adjustment unit 40 so that a constant amount of sample is introduced into the sampling loop 20, based on the pressure measured by the pressure gauge P1. Specifically, the pressure of the chamber 10 measured by the pressure gauge P1 corresponds to the molar amount of the sample gas collected in the chamber 10. Therefore, in the k-th analysis, a molar amount of sample gas corresponding to the difference between the pressure of the chamber 10 in the (k-1)-th analysis and the pressure of the chamber 10 in the k-th analysis is introduced into the sampling loop 20.

Therefore, if the pressure of the chamber 10 in the k-th analysis is Pₖ, the flow rate adjustment unit 40 is controlled in the k-th analysis so that sample gas is introduced into the sampling loop 20 such that Pₖ₋₁ - Pₖ = Pₖ - Pₖ₊₁. As a result, in the second and subsequent analyses, the same amount of sample as in the first analysis can be introduced into the sampling loop 20, regardless of the amount of sample gas remaining in the chamber 10.

### (2) Sampling Process

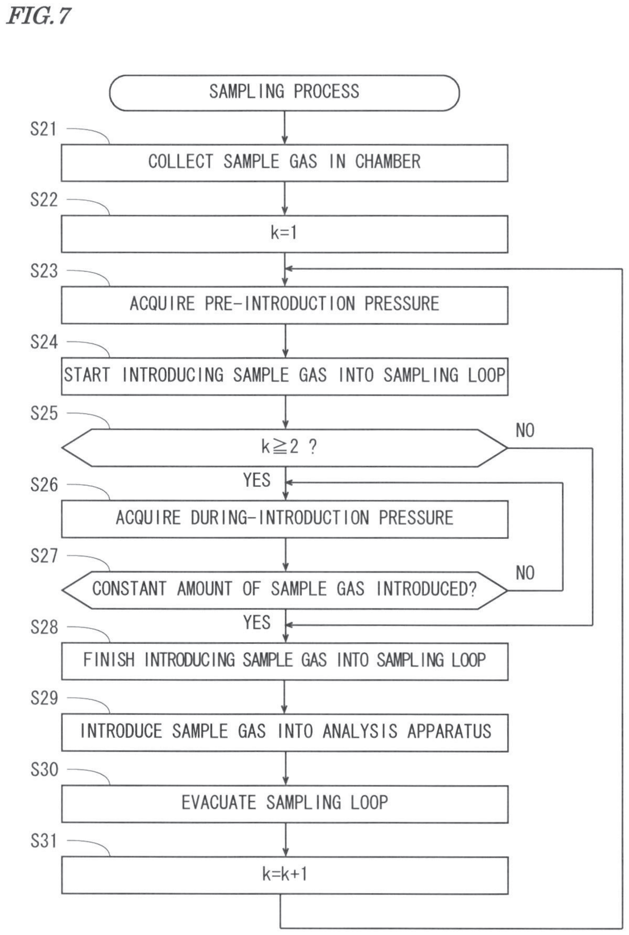

FIG. 7 is a flowchart showing an example of an algorithm for a sampling process executed by the control unit 31 of FIG. 6 based on a sampling program. Hereinafter, the sampling process according to this embodiment will be described using the analysis system 200 of FIG. 6 and the flowchart of FIG. 7. The initial state of the sampling process according to this embodiment is the same as the initial state of the sampling process according to the first embodiment.

First, the apparatus control unit 1 opens the valve v1 for a predetermined time and then closes the valve v1 again, thereby collecting the sample gas sealed in the gas cylinder 110 into the chamber 10 (Step S21). Next, the apparatus control unit 1 sets the variable k to 1 (Step S22). Subsequently, for the k-th analysis, the flow rate control unit 5 acquires the pressure of the chamber 10 measured by the pressure gauge P1 before the sample gas is introduced into the sampling loop 20 (hereinafter referred to as pre-introduction pressure) (Step S23). The pre-introduction pressure for the k-th analysis is Pₖ in the above formula.

Thereafter, the apparatus control unit 1 opens the valve v2 to start introducing the sample gas from the chamber 10 into the sampling loop 20 (Step S24). Here, the flow rate control unit 5 determines whether the variable k is 2 or more (Step S25). If the variable k is 2 or more, the flow rate control unit 5 acquires the pressure of the chamber 10 measured by the pressure gauge P1 while the sample gas is being introduced into the sampling loop 20 (hereinafter referred to as during-introduction pressure) (Step S26). Let Pₓ be the during-introduction pressure acquired in Step S26.

Next, the flow rate control unit 5 determines whether a constant amount of sample gas has been introduced into the sampling loop 20, based on Pₖ₋₁ and Pₖ acquired in Step S23 corresponding to the (k-1)-th and k-th analyses, respectively, and Pₓ acquired in Step S26 (Step S27). In this example, it is determined that a constant amount of sample gas has been introduced into the sampling loop 20 when Pₖ₋₁ - Pₖ = Pₖ - Pₓ. Note that Pₓ at this time becomes the pre-introduction pressure (Pₖ₊₁) acquired in Step S23 in the next analysis (the (k+1)-th analysis).

If a constant amount of sample gas has not been introduced into the sampling loop 20, the process returns to Step S26. In this case, Steps S26 and S27 are repeated until a constant amount of sample gas is introduced into the sampling loop 20. If a constant amount of sample gas has been introduced into the sampling loop 20, the process proceeds to Step S28. If the variable k is not 2 or more in Step S25, that is, if the variable k is 1, the process also proceeds to Step S28.

In Step S28, the apparatus control unit 1 closes the valve v2, thereby terminating the introduction of the sample gas from the chamber 10 into the sampling loop 20 (Step S28). Next, the apparatus control unit 1 opens the valves v3 and v4 for a predetermined time and then closes the valves v3 and v4 again, thereby introducing the sample gas introduced into the sampling loop 20 into the analysis apparatus 140 together with the carrier gas supplied by the carrier gas supply unit 120 (Step S29). In the analysis apparatus 140, the k-th analysis is executed on the introduced sample gas.

Subsequently, the apparatus control unit 1 turns on the vacuum pump 130 for a predetermined time and then turns off the vacuum pump 130 again, thereby evacuating the sampling loop 20 (Step S30). The apparatus control unit 1 also adds 1 to the variable k (Step S31). Thereafter, the process returns to Step S23. As a result, Steps S23 to S31 corresponding to the (k+1)-th analysis are repeated.

### (3) Effects

In the sampling system 100 according to this embodiment, a constant amount of sample is introduced into the sampling loop 20 by controlling the operation of the flow rate adjustment unit 40 based on the pressure at each of the k-th analysis time points. Therefore, even when the sample is in a small amount, the sample can be repeatedly analyzed under the same conditions. This improves the reliability of the analysis results. As a result, analysis results can be obtained with high reliability even when the sample is in a small amount.

### 3. Other Embodiments

(1) In the embodiments described above, the sampling system 100 includes the vacuum pump 130, but the embodiments are not limited to this. If the sampling loop 20 is not evacuated in the initial state of the sampling process, the sampling system 100 does not need to include the vacuum pump 130. In this case, Step S9 is skipped in the sampling process of FIG. 4. Similarly, Step S30 is skipped in the sampling process of FIG. 7.
(2) In the embodiments described above, the carrier gas is supplied to the sampling loop 20, whereby the carrier gas is introduced into the analysis apparatus 140 together with the sample gas, but the embodiments are not limited to this. The sample gas introduced into the sampling loop 20 may be introduced into the sampling loop 20 by suction from the analysis apparatus 140. In this case, carrier gas does not need to be supplied to the sampling loop 20. Therefore, the branch flow path and the valve v4 do not need to be provided in the sampling system 100.
(3) In the first embodiment, the output unit 3 outputs the pressure information stored in the storage unit 32 to the correction unit 4, but the embodiment is not limited to this. The output unit 3 may output the pressure information stored in the storage unit 32 to the analysis control unit 143 of the analysis apparatus 140. In this case, the analysis control unit 143 may generate correction information based on the output pressure information.
   Alternatively, the output unit 3 may output the pressure information stored in the storage unit 32 to an external information processing apparatus, an external storage medium, a display device, a printing device, or the like, of the sampling system 100. In this case, the external information processing apparatus or a user of the sampling system 100 can evaluate the amount of sample introduced into the analysis apparatus 140 for each analysis, based on the output pressure information. Furthermore, the external information processing apparatus or the user can generate correction information based on the output pressure information. If the pressure information is not output to the correction unit 4, the control unit 31 does not need to include the correction unit 4.
(4) In the first embodiment, the sampling system 100 includes the pressure gauge P1, but the embodiment is not limited to this. In the sampling process of FIG. 4, the pressure information of the chamber 10 is not used for generating correction information. Therefore, the sampling system 100 does not need to include the pressure gauge P1.
(5) In the second embodiment, the sampling system 100 includes the pressure gauge P2, but the embodiment is not limited to this. In the sampling process of FIG. 7, the pressure information of the sampling loop 20 is not used for controlling the flow rate adjustment unit 40. Therefore, the sampling system 100 does not need to include the pressure gauge P2.
(6) In the first embodiment, the sampling system 100 may further include a thermometer for measuring the temperature of the sample gas. In this case, the thermometer may be provided in the chamber 10 or in the sampling loop 20. Alternatively, the thermometer may be a room thermometer, and the temperature of the room where the sampling system 100 is installed may be measured as the temperature of the sample gas.

In this configuration, the storage control unit 2 further causes the storage unit 32 to store temperature information indicating the temperature measured by the thermometer each time an analysis is performed by the analysis apparatus 140. The output unit 3 further outputs the temperature information stored in the storage unit 32. The correction unit 4 generates the correction information further based on the temperature information output by the output unit 3.

Specifically, let Tₖ be the temperature of the sample gas in the k-th analysis. In this case, the correction information for correcting the k-th analysis result may be, for example, P₁·Tₖ/(Pₖ·T₁). According to this configuration, more accurate correction information can be generated. Therefore, by multiplying the k-th analysis result by this correction information, a more accurate analysis result can be obtained for a case where a sample gas of the same molar amount as the sample gas introduced into the analysis apparatus 140 during the first analysis is introduced in the k-th analysis.

(7) In the first embodiment, the correction information may be generated based on the pressure information of the chamber 10 instead of the pressure information of the sampling loop 20. For example, let Pₖ be the pressure of the chamber 10 in the k-th analysis. In this case, the molar amount of the sample gas introduced into the sampling loop 20 in the k-th analysis corresponds to Pₖ - Pₖ₊₁. Therefore, the correction information for correcting the k-th analysis result may be, for example, (P₁ - P₂)/(Pₖ - Pₖ₊₁).

By multiplying the k-th analysis result by this correction information, an analysis result can be obtained for a case where a sample gas of the same molar amount as the sample gas introduced into the analysis apparatus 140 during the first analysis is introduced in the k-th analysis. In this configuration, the pressure information of the sampling loop 20 is not used for generating the correction information. Therefore, the sampling system 100 does not need to include the pressure gauge P2.

Furthermore, in this configuration as well, the correction information may be generated further based on temperature information indicating the temperature of the sample. For example, let Tk be the temperature of the sample gas in the k-th analysis. In this case, the correction information for correcting the k-th analysis result may be, for example, (P₁T₂ - P₂T₁)TₖTₖ₊₁/((PₖTₖ₊₁ - Pₖ₊₁Tₖ)T₁T₂).

According to this configuration, more accurate correction information can be generated. Therefore, by multiplying the k-th analysis result by this correction information, a more accurate analysis result can be obtained for a case where a sample gas of the same molar amount as the sample gas introduced into the analysis apparatus 140 during the first analysis is introduced in the k-th analysis.

(8) In the second embodiment, the flow rate adjustment unit 40 may be controlled further based on the temperature of the sample gas. For example, let Tₖ be the temperature of the sample gas in the k-th analysis. In this case, in the k-th analysis, the flow rate adjustment unit 40 may be controlled such that Pₖ₋₁/Tₖ₋₁ - Pₖ/Tₖ = Pₖ/Tₖ - Pₖ₊₁/Tₖ₊₁. According to this configuration, a constant amount of sample gas can be introduced into the sampling loop 20 more accurately. As a result, a more accurate analysis result can be obtained in the k-th analysis.

(9) In the second embodiment, the flow rate adjustment unit 40 may be controlled based on the pressure of the sampling loop 20 instead of the pressure of the chamber 10. For example, let Pₖ be the pressure of the sampling loop 20 in the k-th analysis. This Pₖ corresponds to the molar amount of the sample gas introduced into the sampling loop 20 in the k-th analysis. Therefore, in the k-th analysis, the flow rate adjustment unit 40 may be controlled such that Pₖ₋₁ = Pₖ.

According to this configuration, in the second and subsequent analyses, the same amount of sample as in the first analysis can be introduced into the sampling loop 20, regardless of the amount of sample gas remaining in the chamber 10. As a result, an accurate analysis result can be obtained in the k-th analysis. In this configuration, the pressure of the chamber 10 is not used for controlling the flow rate adjustment unit 40. Therefore, the sampling system 100 does not need to include the pressure gauge P1.

Furthermore, in this configuration as well, the flow rate adjustment unit 40 may be controlled further based on the temperature of the sample gas. For example, let Tₖ be the temperature of the sample gas in the k-th analysis. In this case, in the k-th analysis, the flow rate adjustment unit 40 may be controlled such that Pₖ₋₁/Tₖ₋₁ = Pₖ/Tₖ. According to this configuration, a constant amount of sample gas can be introduced into the sampling loop 20 more accurately. As a result, a more accurate analysis result can be obtained in the k-th analysis.

### 4.Aspects

It will be understood by those skilled in the art that the plurality of exemplary embodiments described above are specific examples of the following aspects.

(Item 1) A sampling system according to one aspect may be: a sampling system for sampling a sample to be introduced into an analysis apparatus, the sampling system comprising: a chamber in which the sample is collected; a sampling loop into which the sample collected in the chamber is introduced; a pressure gauge that measures the pressure of at least one of the chamber and the sampling loop; a storage unit that stores pressure information indicating the pressure at each k-th (k is an integer of 1 or more) analysis time point measured by the pressure gauge; and an output unit that outputs the pressure information stored in the storage unit.

In this sampling system, pressure information indicating the pressure of at least one of the chamber and the sampling loop at each of the k-th analysis time points is stored in the storage unit, and the pressure information is output. Therefore, it is possible to evaluate the amount of sample introduced into the analysis apparatus for each analysis, based on the pressure information. Furthermore, even when the amount of sample introduced into the sampling loop decreases with each repeated analysis, it is possible to correct the analysis result of each analysis to an analysis result for a case where a constant amount of sample is introduced into the analysis apparatus, based on the output pressure information.

Therefore, according to the above configuration, it is not necessary to introduce the sample into the sampling loop under the same conditions for each analysis. Furthermore, even when the introduced sample is in a small amount, the sample can be repeatedly analyzed, and analysis results similar to those obtained when the sample is introduced into the analysis apparatus under the same conditions for each analysis can be obtained. This improves the reliability of the analysis results. As a result, analysis results can be obtained with high reliability even when the sample is in a small amount.

(Item 2) The sampling system according to Item 1 may further comprise a correction unit that generates correction information for correcting the analysis results obtained by the analysis apparatus to analysis results for a case where a constant amount of sample is introduced into the analysis apparatus, based on the pressure information output by the output unit.

In this case, by using the correction information generated by the correction unit, the analysis results obtained by the analysis apparatus are corrected to analysis results for a case where a constant amount of sample is introduced into the analysis apparatus. Therefore, analysis results with improved reliability can be easily obtained.

(Item 3) In the sampling system according to Item 2, the pressure gauge may measure the pressure of the sampling loop, and when the pressure of the sampling loop in the k-th analysis is Pₖ, the correction unit may generate P₁/Pₖ as the correction information for correcting the k-th analysis result.

In this case, correction information can be generated with a simple configuration.

(Item 4) In the sampling system according to Item 2, the pressure gauge may measure the pressure of the chamber, and when the pressure of the chamber in the k-th analysis is Pₖ, the correction unit may generate (P₁ - P₂)/(Pₖ - Pₖ₊₁) as the correction information for correcting the k-th analysis result.

In this case, correction information can be generated with a simple configuration.

(Item 5) In the sampling system according to Item 2, the storage unit may further store temperature information indicating the temperature of the sample at each of the k-th analysis time points, the output unit may further output the temperature information stored in the storage unit, and the correction unit may generate the correction information further based on the temperature information output by the output unit.

In this case, more accurate correction information can be generated.

(Item 6) In the sampling system according to Item 1, the output unit may output the pressure information to the analysis apparatus.

According to this configuration, the analysis apparatus becomes capable of correcting the analysis result of each analysis to an analysis result for a case where a constant amount of sample is introduced into the analysis apparatus, based on the output pressure information.

(Item 7) A sampling system according to another aspect may be: a sampling system for sampling a sample to be introduced into an analysis apparatus, the sampling system comprising: a chamber in which the sample is collected; a sampling loop into which the sample collected in the chamber is introduced; a pressure gauge that measures the pressure of at least one of the chamber and the sampling loop; a flow rate adjustment unit that adjusts the flow rate of the sample introduced from the chamber into the sampling loop; and a flow rate control unit that controls the operation of the flow rate adjustment unit so that a constant amount of sample is introduced into the sampling loop, based on the pressure at each k-th (k is an integer of 1 or more) analysis time point measured by the pressure gauge.

In this sampling system, a constant amount of sample is introduced into the sampling loop by controlling the operation of the flow rate adjustment unit based on the pressure at each of the k-th analysis time points. Therefore, even when the sample is in a small amount, the sample can be repeatedly analyzed under the same conditions. This improves the reliability of the analysis results. As a result, analysis results can be obtained with high reliability even when the sample is in a small amount.

(Item 8) In the sampling system according to Item 7, the pressure gauge may measure the pressure of the chamber, and when the pressure of the chamber in the k-th analysis is Pₖ, the flow rate control unit may control the operation of the flow rate adjustment unit in the k-th analysis such that Pₖ₋₁ - Pₖ = Pₖ - Pₖ₊₁.

In this case, a constant amount of sample can be introduced into the sampling loop with a simple configuration.

(Item 9) In the sampling system according to Item 7, the pressure gauge may measure the pressure of the sampling loop, and when the pressure of the sampling loop in the k-th analysis is Pₖ, the flow rate control unit may control the operation of the flow rate adjustment unit in the k-th analysis such that Pₖ₋₁ = Pₖ.

In this case, a constant amount of sample can be introduced into the sampling loop with a simple configuration.

(Item 10) In the sampling system according to Item 7, the flow rate adjustment unit may acquire the temperature of the sample at each of the k-th analysis time points, and the flow rate control unit may be controlled further based on the acquired temperature.

In this case, a constant amount of sample can be introduced into the sampling loop more accurately.

(Item 11) A sampling method according to still another aspect may be: a sampling method for sampling a sample to be introduced into an analysis apparatus, the sampling method comprising: collecting the sample in a chamber; introducing the sample collected in the chamber into a sampling loop; measuring the pressure of at least one of the chamber and the sampling loop with a pressure gauge; storing pressure information indicating the pressure at each k-th (k is an integer of 1 or more) analysis time point measured by the pressure gauge in a storage unit; and outputting the pressure information stored in the storage unit.

According to this sampling method, it is not necessary to introduce the sample into the sampling loop under the same conditions for each analysis. Furthermore, even when the introduced sample is in a small amount, the sample can be repeatedly analyzed, and analysis results similar to those obtained when the sample is introduced into the analysis apparatus under the same conditions for each analysis can be obtained. This improves the reliability of the analysis results. As a result, analysis results can be obtained with high reliability even when the sample is in a small amount.

(Item 12) A sampling method according to yet another aspect may be: a sampling method for sampling a sample to be introduced into an analysis apparatus, the sampling method comprising: collecting the sample in a chamber; introducing the sample collected in the chamber into a sampling loop; measuring the pressure of at least one of the chamber and the sampling loop with a pressure gauge; adjusting the flow rate of the sample introduced from the chamber into the sampling loop with a flow rate adjustment unit; and controlling the operation of the flow rate adjustment unit so that a constant amount of sample is introduced into the sampling loop, based on the pressure at each k-th (k is an integer of 1 or more) analysis time point measured by the pressure gauge.

According to this sampling method, since a constant amount of sample is introduced into the sampling loop, the sample can be repeatedly analyzed under the same conditions even when the sample is in a small amount. This improves the reliability of the analysis results. As a result, analysis results can be obtained with high reliability even when the sample is in a small amount.

## Claims

1. A sampling system for sampling a sample to be introduced into an analysis apparatus, the sampling system comprising: a chamber in which the sample is collected; a sampling loop into which the sample collected in the chamber is introduced; a pressure gauge that measures the pressure of at least one of the chamber and the sampling loop; a storage unit that stores pressure information indicating the pressure at each k-th (k is an integer of 1 or more) analysis time point measured by the pressure gauge; and an output unit that outputs the pressure information stored in the storage unit.

2. The sampling system according to claim 1, further comprising a correction unit that generates correction information for correcting the analysis results obtained by the analysis apparatus to analysis results for a case where a constant amount of sample is introduced into the analysis apparatus, based on the pressure information output by the output unit.

3. The sampling system according to claim 2, wherein the pressure gauge measures the pressure of the sampling loop, and when the pressure of the sampling loop in the k-th analysis is Pₖ, the correction unit generates P₁/Pₖ as the correction information for correcting the k-th analysis result.

4. The sampling system according to claim 2, wherein the pressure gauge measures the pressure of the chamber, and when the pressure of the chamber in the k-th analysis is Pₖ, the correction unit generates (P₁ - P₂)/(Pₖ - Pₖ₊₁) as the correction information for correcting the k-th analysis result.

5. The sampling system according to claim 2, wherein the storage unit further stores temperature information indicating the temperature of the sample at each of the k-th analysis time points, the output unit further outputs the temperature information stored in the storage unit, and the correction unit generates the correction information further based on the temperature information output by the output unit.

6. The sampling system according to claim 1, wherein the output unit outputs the pressure information to the analysis apparatus.

7. A sampling system for sampling a sample to be introduced into an analysis apparatus, the sampling system comprising: a chamber in which the sample is collected; a sampling loop into which the sample collected in the chamber is introduced; a pressure gauge that measures the pressure of at least one of the chamber and the sampling loop; a flow rate adjustment unit that adjusts the flow rate of the sample introduced from the chamber into the sampling loop; and a flow rate control unit that controls the operation of the flow rate adjustment unit so that a constant amount of sample is introduced into the sampling loop, based on the pressure at each k-th (k is an integer of 1 or more) analysis time point measured by the pressure gauge.

8. The sampling system according to claim 7, wherein the pressure gauge measures the pressure of the chamber, and when the pressure of the chamber in the k-th analysis is Pₖ, the flow rate control unit controls the operation of the flow rate adjustment unit in the k-th analysis such that Pₖ₋₁ - Pₖ = Pₖ - Pₖ₊₁.

9. The sampling system according to claim 7, wherein the pressure gauge measures the pressure of the sampling loop, and when the pressure of the sampling loop in the k-th analysis is Pₖ, the flow rate control unit controls the operation of the flow rate adjustment unit in the k-th analysis such that Pₖ₋₁ = Pₖ.

10. The sampling system according to claim 7, wherein the flow rate adjustment unit acquires the temperature of the sample at each of the k-th analysis time points, and the flow rate control unit is controlled further based on the acquired temperature.

11. A sampling method for sampling a sample to be introduced into an analysis apparatus, the sampling method comprising: collecting the sample in a chamber; introducing the sample collected in the chamber into a sampling loop; measuring the pressure of at least one of the chamber and the sampling loop with a pressure gauge; storing pressure information indicating the pressure at each k-th (k is an integer of 1 or more) analysis time point measured by the pressure gauge in a storage unit; and outputting the pressure information stored in the storage unit.

12. A sampling method for sampling a sample to be introduced into an analysis apparatus, the sampling method comprising: collecting the sample in a chamber; introducing the sample collected in the chamber into a sampling loop; measuring the pressure of at least one of the chamber and the sampling loop with a pressure gauge; adjusting the flow rate of the sample introduced from the chamber into the sampling loop with a flow rate adjustment unit; and controlling the operation of the flow rate adjustment unit so that a constant amount of sample is introduced into the sampling loop, based on the pressure at each k-th (k is an integer of 1 or more) analysis time point measured by the pressure gauge.
